# EUROPEAN PATENT SPECIFICATION

(11) **EP 1 352 791 B1**
(45) Date of publication and mention of the grant of the patent: **30.03.2005**
(21) Application number: 03008007.1
(22) Date of filing: 10.04.2003
(51) Int. Cl.: B60R 21/04, B60R 13/02, B60J 5/04

(54) **Shock absorbing device for vehicle trim**
Stossabsorber für ein Fahrzeugverkleidungselement
Dispositif d'absorption de choc pour garnitures d'automobile

(30) Priority: 11.04.2002 JP 2002109046
(43) Date of publication of application: 15.10.2003
(73) Proprietor: NISSAN MOTOR CO., LTD., Yokohama-shi Kanagawa-ken (JP)
(72) Inventor: Komatsu, Motoru, Sagamihara-shi, Kanagawa-ken (JP)
(74) Representative: Grünecker, Kinkeldey, Stockmair & Schwanhäusser Anwaltssozietät

(56) References cited:
- US-A- 5 221 782
- US-A- 5 433 478
- US-A- 5 795 013
- US-A- 5 806 889

## Description

### BACKGROUND OF THE INVENTION

### 1. Field of the Invention

The present invention relates to a shock absorbing device for a vehicle trim to be used for absorbing impact in the event of a side collision, which is disposed on the interior side of a side panel such as a door panel or the rear fender panel of an automobile.

### 2. Description of the Related Art.

As a passenger protection measure against a side collision of a vehicle, a device for absorbing impact upon the secondary collision of a passenger against a door trim is provided on, for example, the rear face side of a door trim equipped on the interior side of a door panel of an automobile. Conventionally, such a shock absorbing device includes a box-type rib structure or a honeycomb structure made of thermoplastic resin, which is designed to be crushed to absorb impact in the event of a collision of a passenger against a door trim (Japanese Patent Applications Laid-Open JP-A-8011 539 (1996) and JP-A-8295 194 (1996)). A shock absorbing device comprising the features of the preamble of claim 1 is disclosed in US-A-57 95 013.

### SUMMARY OF THE INVENTION

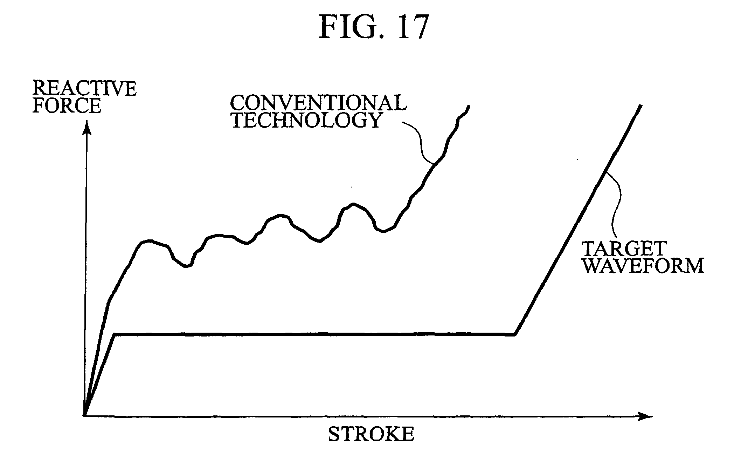

In the above-described shock absorbing devices, it is preferred that the relationship between a crushing stroke and a reactive force indicates a target waveform as shown in FIG. 17 in order to enhance shock absorption efficiency in the event of a collision. That is, the waveform showing good shock absorption efficiency refers to the waveform in which the stroke is sustained while keeping the reactive force low. Accordingly, a good shock absorbing device should have a suitable structure in order to realize the waveform approximate to the target waveform.

FIG. 17 also shows data concerning a conventional shock absorbing device having a box-type rib structure. When force (F) is applied, the conventional shock absorbing device absorbs the impact, having several peaks of the reactive force imparted by the ribs. However, as the ribs proceed to be crushed, they remain in the crushed area, whereby the crushed rib's remains increase the reactive force, and the shock absorbing device is flattened (the state where crushing does not proceed any further), with the short stroke because of the crushed rib's remains, the reactive force is also increased.

In short, the conventional shock absorbing device has a problem in that the device is flattened in a state where its original stroke amount is not fully utilized because of the crushed rib's remains, and in that the structure of the device hinders further enhancement in shock absorption efficiency. Another conceivable idea is to provide a larger space on the rear side of the door trim as a margin for the given stroke amount and the crushed rib's remains. However, this idea has a problem in that the door trim protrudes further inward and the interior space of the automobile is reduced accordingly.

. The present invention has been made in consideration of the foregoing problems. It is an object of the present invention to provide a shock absorbing device for a vehicle trim capable of minimizing crushed rib's remains, and enhancing shock absorption efficiency, without increasing the space on the rear side of the trim

As a solution to the object the present invention provides a shock absorbing device as defined in claim 1. Preferred embodiments of the inventive device are defined in the dependent claims 2 to 10.

### BRIEF DESCRIPTION OF THE DRAWINGS

The invention will now be described with reference to the accompanying drawings wherein;
FIG. 1 is a perspective view showing an embodiment of a shock absorbing device for a vehicle trim according to the present invention;
FIG. 2 is a perspective view showing a state where the shock absorbing device shown in FIG. 1 is disposed on the rear face side of a door trim;
FIG. 3 is a plan view showing a state where the force is applied to the shock absorbing device;
FIG. 4A is a plan view showing a state where an outer rib abuts on the door panel following FIG. 3;
FIG. 4B is a graph showing a relationship between a stroke and a reactive force when an outer rib abuts on a door panel following FIG. 3;
FIG. 5A is a plan view showing a state where the outer rib is deformed following FIG. 4A;
FIG. 5B is a graph showing a relationship between the stroke and the reactive force when the outer rib is deformed following FIG. 4A;
FIG. 6A is a plan view showing a state where the outer rib is broken following FIG. 5A;
FIG. 6B is a graph showing a relationship between the stroke and the reactive force when the outer rib is broken following FIG. 5A;
FIG. 7A is a plan view showing a state where an inner rib abuts on the door panel following FIG. 6A;
FIG. 7B is a graph showing a relationship between a stroke and a reactive force when an inner rib abuts on the door panel following FIG. 6A;
FIG. 8A is a plan view showing a state where the inner rib is broken following FIG. 7A;
FIG. 8B is a graph showing a relationship between the stroke and the reactive force when the inner rib is broken following FIG. 7A;
FIG. 9A is a plan view showing a state where the shock absorbing device is flattened following FIG. 8A;
FIG. 9B is a graph showing a relationship between the stroke and the reactive force when the shock absorbing device is flattened following FIG. 8A;
FIG. 10 is a graph showing a relationship between the stroke and the reactive force in shock absorption of the shock absorbing device shown in FIG. 1 with a target waveform;
FIGs. 11A, 11B, 11C, and 11D are plan views explaining a state where the force is applied to the shock absorbing device shown in FIG. 1 from an oblique direction;
FIGs. 12A, 12B, 12C, and 12D are plan views explaining a state where the force is applied to the shock absorbing device shown in FIG. 1 from another oblique direction;
FIG. 13 is a view showing another embodiment of the shock absorbing device according to the present invention;
FIG. 14 is a view showing a further embodiment of the shock absorbing device according to the present invention;
FIG. 15 is a view showing a further embodiment of the shock absorbing device according to the present invention;
FIG. 16 is a graph showing a relationship between the stroke and the reactive force in shock absorption of the shock absorbing device of the comparative example with the target waveform;
FIG. 17 is a graph showing a relationship between the stroke and the reactive force in shock absorption of the conventional shock absorbing device with the target waveform.

### DETAILED DESCRIPTION OF THE PREFERRED EMBODIMENT

Hereinafter, description will be made of embodiments of the present invention with reference to the drawings.

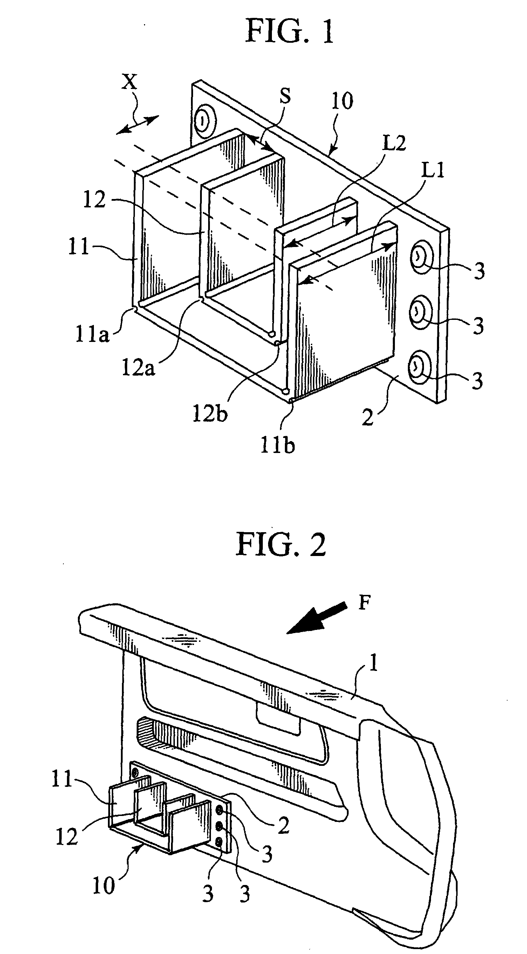

As shown in FIG. 1 and FIG. 2, a shock absorbing device 10 is provided on the exterior side (the rear side) of a door trim 1 which is fitted to the interior side of a door panel being a side panel of a vehicle. This shock absorbing device 10 is molded with polyolefin resin, specifically, polypropylene resin. In the shock absorbing device 10, a plurality of shock absorbing ribs 11 and 12, which protrude in the panel thickness direction indicated by an arrow X in FIG. 1, are disposed on one side of a flat plate 2 approximately coaxially with provision of a given space.

Regarding the two inner and outer ribs 11 and 12 which are mutually adjacent to each other, the outer rib 11 is formed into a shape in which at least part of an upper portion thereof is made open and open ends on both sides thereof are positioned further outward than the inner rib 12 on the right and the left. Each of the ribs 11 and 12 in this embodiment is formed approximately into a U-shape in the cross-sectional view along the panel thickness direction. In addition, the protruding length L1 of the outer rib 11 is made greater than the protruding length L2 of the inner rib 12.

In the shock absorbing device 10, a proportion of the protruding length L1 of the outer rib 11 to a space S between the inner and outer ribs 11 and 12 is set in a range from 1 : 0.1 to 1 : 2. The reason for setting the proportion in the range 1 : 0.1 to 1 : 2 is because the outer rib may contact with the inner rib upon crushing if the proportion is made less than 1 : 0.1. In this case, the outer rib may affect the reactive force of the inner rib and make a target reactive force waveform difficult to obtain. Meanwhile, a proportion above 1 : 2.0 may result in degradation of space efficiency attributable to provision of an excessive space because preventing interference of the inner and outer ribs is actually achievable with a smaller proportion. In this embodiment, the protruding length L1 of the outer rib 11 is set to 75 mm, the protruding length L2 of the inner rib 12 is set to 50 mm, and the space S between the inner and outer ribs 11 and 12 is set to 30 mm.

Moreover, corner portions 11a, 11b, 12a and 12b on both lower sides of the inner and outer ribs 11 and 12 are made thin, so that the inner and outer ribs 11 and 12 can be easily broken. In this way, breakage of the ribs is easily achieved and a more stable reactive force can be obtained. The flat plate 2 including the ribs 11 and 12 is joined to the door trim 1 with bosses 3 which are provided on the rear face of the door trim 1.

Here, regarding the shock absorbing device for a vehicle trim according to the present invention, it is preferable that the material for composing the ribs is either a polyolefin resin composition containing 100 parts by weight of block copolymer (a component A) including 75 weight % to 95 weight % inclusive of polypropylene having a density of 0.895 g/cm³ or greater, and 5 weight % to 25 weight % inclusive of propylene/ethylene random copolymer having ethylene content in a range from 35 weight % to 45 weight % inclusive and having a melt flow rate (230 °C , 21.2 N (load)) in a range from 5 g/10 min. to 50 g/10 min. inclusive, or a polyolefin resin composition containing 90 weight parts or more but less than 100 weight parts of the component A and more than 0 weight part to 10 weight parts of talc (a component B) having an average grain size in a range from 1.5 to 6 µm inclusive. Here, it is also preferable that the material has Izod impact strength in a range from 5 kJ/m to 20 kJ/m inclusive, and a bend elastic constant in a range from 700 MPa to 2000 MPa inclusive.

In the above-described constitution, the density of the material for composing the ribs is measured on an injection-molded product based on JIS K7112A (ISO 1183). The ethylene content is obtained as follows: 1 g of the copolymer composing the propylene/ethylene copolymer portion is formed into a film with a press machine at 230 °C and then introduced to an infrared spectrophotometer. Thereafter, the ethylene content is determined in accordance with a Gardner calibration curve by use of the characteristic absorbance of the methyl group (-CH₃) and the methylene group (-CH₂-) in the obtained infrared absorption spectrum (I. J. Gardner et al, Rubber Chem and Teck., 44, 1105 (1975)).

The Izod impact strength is measured by hitting with the notched face of a Type-A notched test piece at the temperature of 23 °C in accordance with JIS K7110 (ISO 180), and the bend elastic constant is measured by use of an injection-molded standard test piece at a temperature of 23 °C in accordance with JIS K7171 (ISO 178).

The reasons for the numerical restrictions of the respective components are as follows: specifically, when the density of the polypropylene portion is below 0.895 g/cm³ in the component A, the crystallinity of the polyolefin resin composition is degraded and sufficient target rigidity is not obtained. When the ethylene content is below 35 weight %, the impact resistance of the polyolefin resin composition is degraded and the target impact value is not obtained. On the contrary, when the ethylene content exceeds 45 weight %, the flow performance of the polyolefin resin composition is degraded and the target melt flow rate value (MFR value) is not obtained.

Moreover, formability is degraded when the melt flow rate is below 5 g/10 min. On the contrary, rigidity is degraded when the melt flow rate exceeds 50 g/10 min. Therefore, it is necessary to increase the board thickness of the ribs so as to create the reactive force thereof. As a result, the board thickness for creating the reactive force of the ribs becomes excessive, making it difficult to obtain the stable ribs due to problems such as sink marks.

Furthermore, when the propylene/ethylene random copolymer portion is below 5 weight %, the force used for installing the ribs onto the trim or attaching the trim installed with the ribs onto the vehicle may lead to parts breaking or falling off. On the contrary, when the propylene/ethylene random copolymer portion exceeds 25 weight %, the crushed rib's remains are generated because of insufficient breakage in response to the force of a passenger upon a side collision. Accordingly, shock absorption efficiency is degraded in this case.

Moreover, if for component B, talc with an average grain size below 1.5 µm was used, talc manufacturing at this size would be of very low quality, and not only would a stable supply of talc of this size be impossible, but a cost increase would also occur. On the contrary, when the average grain size of talc exceeds 6 µm, there is extreme deterioration in the impact resistance and the target impact value cannot be obtained. The impact strength of the polyolefin resin composition is degraded when the amount of talc exceeds 10 parts by weight. Accordingly, the force used for installing the ribs onto the trim or attaching the trim installed with the ribs onto the vehicle may lead to parts breaking or falling off.

Furthermore, when the Izod impact strength of the polyolefin resin composition is below 5 kJ/m, the force used for installing the ribs onto the trim or attaching the trim installed with the ribs onto the vehicle may lead to parts breaking or falling off. When the Izod impact strength of the polyolefin resin composition exceeds 20 kJ/m, crushed rib's remains are generated because of insufficient breakage in response to the force of a passenger upon a side collision. Accordingly, shock absorption efficiency is degraded.

In addition, rigidity is degraded when the bend elastic constant is below 700 MPa. Therefore, it is necessary to increase the board thickness of the ribs so as to create the reactive force thereof. As a result, the board thickness for creating the reactive force of the ribs becomes excessive, making it difficult to obtain the stable ribs due to problems such as sink marks. When the bend elastic constant exceeds 2000 MPa, it is necessary to reduce the thickness of the ribs because rigidity is too strong. As a result, formation of the ribs becomes difficult because the ribs are too thin and the resin cannot flow. Accordingly, regarding the characteristics of the material made of the polyolefin resin composition for composing the ribs, the Izod impact strength should be set in the range from 5 kJ/m to 20 kJ/m inclusive and the bend elastic constant should be set in the range from 700 MPa to 2000 MPa inclusive.

Since the thermoplastic resin made of the polyolefin resin composition is used as the material for composing the ribs, it is possible to fabricate the ribs at a relatively low cost and allow adjustment to the physical property balance thereof.

Here in this embodiment, polypropylene resin is used as the material for composing the ribs 11 and 12 as well as the flat plate 2. The physical properties of this resin are: a specific gravity of 0.9 g/cm³; a melt flow rate of 30 g/10 min.; a Izod impact strength of 8 kJ/m; and a bend elastic constant of 1250 MPa.

Next, description will be made regarding an operation of the shock absorbing device 10 having the above-described constitution.

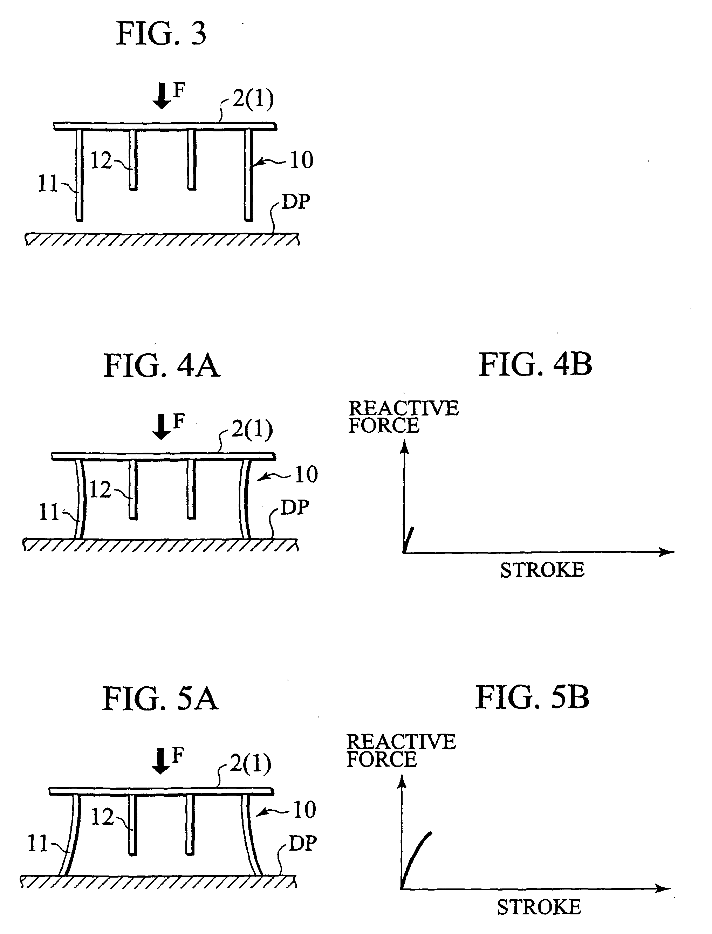

As shown in FIG. 3, the shock absorbing device 10 is disposed so as to allow tips of the ribs 11 and 12 to face toward a door panel DP with a given space. When a side collision occurs on the vehicle, the impact of the side collision causes a secondary collision between a passenger and the door trim 1. Accordingly, the shock absorbing device 10 receives the force F from the door trim 1 side as indicated by an arrow in FIG. 3.

Upon receipt of the force F, the outer rib 11 having the maximum protruding length L1 of the shock absorber device 10 abuts on the door panel DP and is deformed as shown in FIG. 4A, and the reactive force is generated as shown in FIG. 4B. Then, the outer rib 11 slides on the surface of the door panel DP and is plastically deformed so as to spread outward as shown in FIG. 5A. In this event, the slope of the reactive force becomes gentle as shown in FIG. 5B.

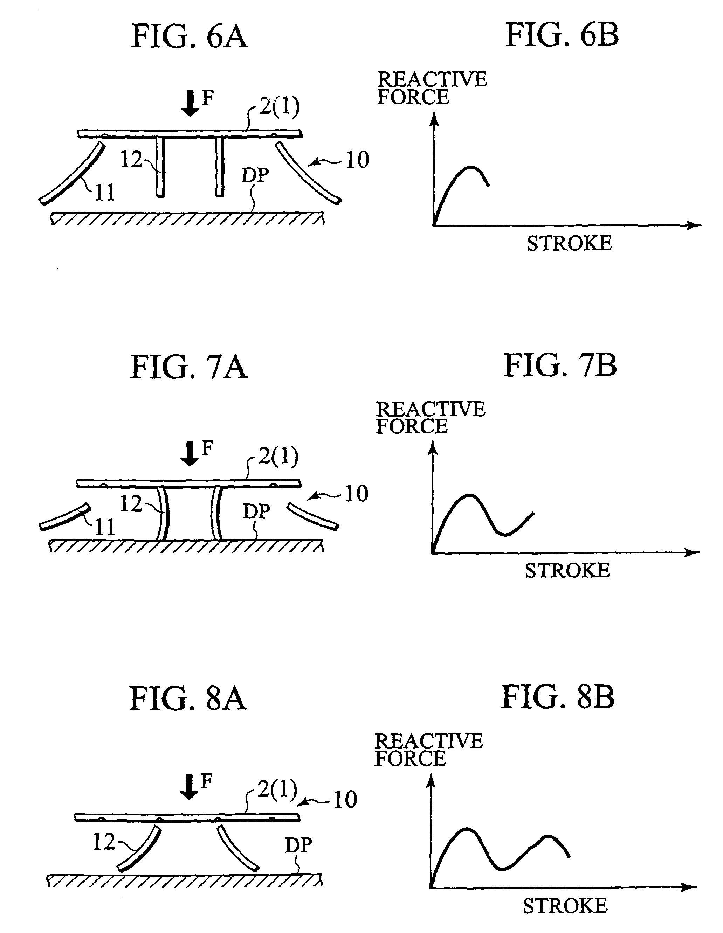

Thereafter, as the plastic deformation of the outer rib 11 proceeds, the stress is more centered on the base thereof than the deformed portion in the middle. Accordingly, fractures occur at the thinned corner portions 11a, 11b, 12a and 12b. In this event, since the impact strength of the polypropylene resin, which is the material of the outer rib 11, is as low as 8 kJ/m, the outer rib 11 is broken at the base as shown in FIG. 6A. At that point, the reactive force drops as shown in FIG. 6B.

As the outer rib 11 is formed approximately into a U-shape in which the upper side thereof is made open and the open ends on the both sides thereof are positioned more outward than the inner rib 12 on the right and the left, the outer rib 11 falls off due to its own weight after breakage, without any interference to the inner rib 12.

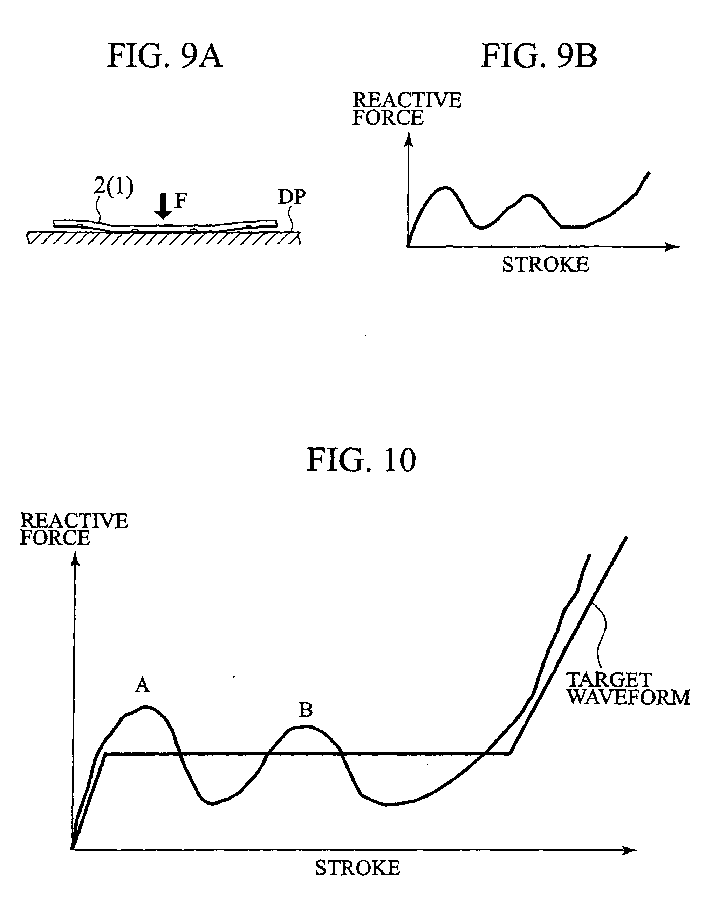

As shown in FIG. 7A, the inner rib 12 abuts on the door panel DP and as the rib 12 is deformed, and the reactive force increases as shown in FIG. 7B. In addition, as similar to the case of the outer rib 11, the inner rib 12 breaks and falls off as shown in FIG. 8A, and the reactive force drops as shown in FIG. 8B. Eventually, the flat plate 2 abuts on the door panel and is flattened as shown in FIG. 9A, and the reactive force increases as shown in FIG. 9B.

As described above, in the shock absorbing device 10, a peak A which is the reactive force attributable to the outer rib 11 and the drop of the reactive force attributable to the breakage thereof, as well as a peak B which is the reactive force attributable to the inner rib 12 and the drop of the reactive force attributable to the breakage thereof is generated as shown in FIG. 10. That is, after the reactive force repeatedly increases and decreases while passing through the two peaks A and B, the shock absorbing device 10 is flattened and thereafter the reactive force increases. Accordingly, the relationship between the stroke and the reactive force on the whole becomes approximately equal to the target waveform, and shock absorption is stably and efficiently performed, while the reactive force is suppressed at a low level.

Moreover, since all the ribs 11 and 12 fall off before the shock absorbing device 10 is flattened, the crushed rib's remains 11 and 12 are eliminated and a sufficient stroke is obtained. Therefore, it is not necessary to consider an additional margin for the crushed rib's remains 11 and 12 upon designing the space for disposing the shock absorbing device 10. Hence it is possible to reduce the size of the shock absorbing device 10 down to the minimum requirement for securing a given stroke. In this way, the space on the rear side of the door trim 1 can be effectively used.

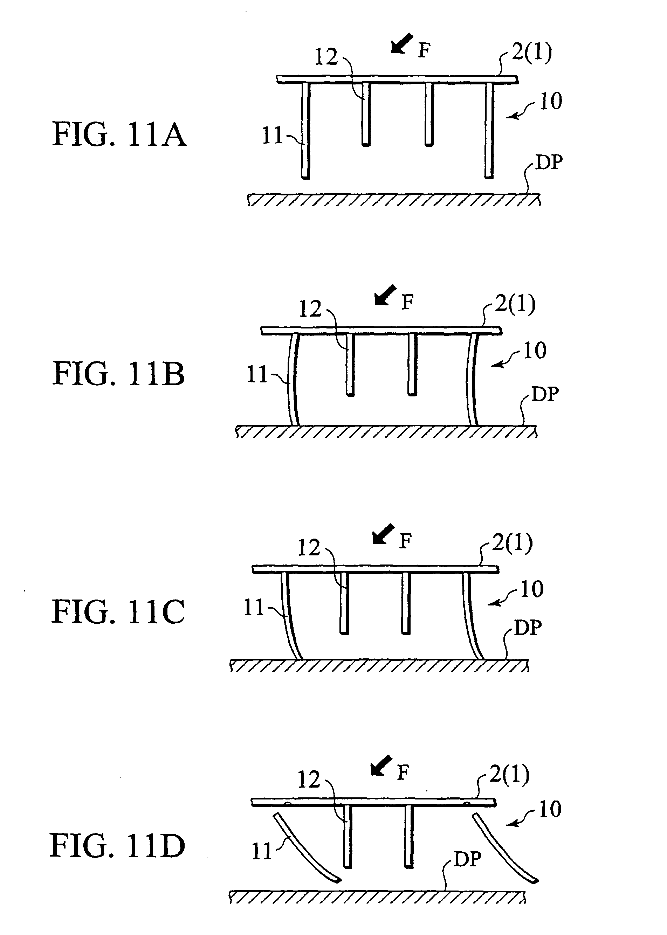

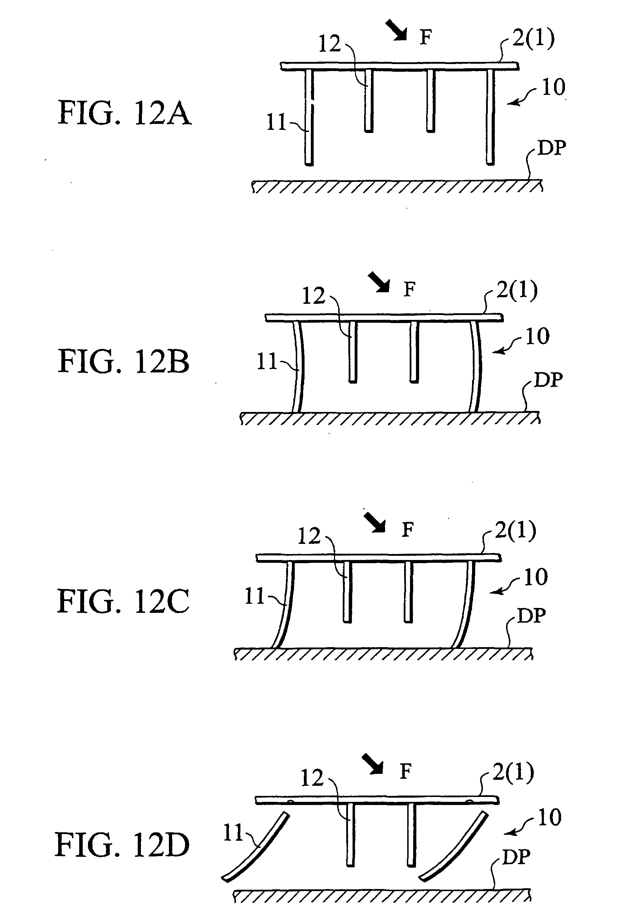

FIG. 11A to FIG. 11D and FIG. 12A to FIG. 12D are views for explaining the cases where the force F is applied to the shock absorbing device 10 from oblique directions. In each of these cases, when the force F is applied as shown in FIG. 11A or FIG. 12A, the outer rib 11 abuts on the door panel DP and is deformed as shown in FIG. 11B or FIG. 12B. Then, the plastic deformation of the outer rib 11 proceeds as shown in FIG. 11C or FIG. 12C, and subsequently, the outer rib 11 is broken at the base thereof as shown in FIG. 11D or FIG. 12D.

In this event, in the shock absorbing device 10, one side of the outer rib 11 is deformed so as to approach the inner rib 12 unlike the case when the force F is applied from approximately the perpendicular direction as shown in FIG. 3 to FIG. 9B. However, since in the shock absorbing device 10, the space S between the inner and outer ribs 11 and 12 is sufficiently secured, the outer rib 11 falls off due to its own weight, without any interference to the inner rib 12.

Thereafter, the shock absorbing device 10 is flattened after the inner rib 12 is broken and falls off as in the previous example. Accordingly, on the whole, the reactive force is a repetition of peaks and valleys. For this reason, the relationship between the stroke and the reactive force becomes approximately equal to the target waveform as shown in FIG. 10, and shock absorption is efficiently stabilized while the reactive force is suppressed at a low level.

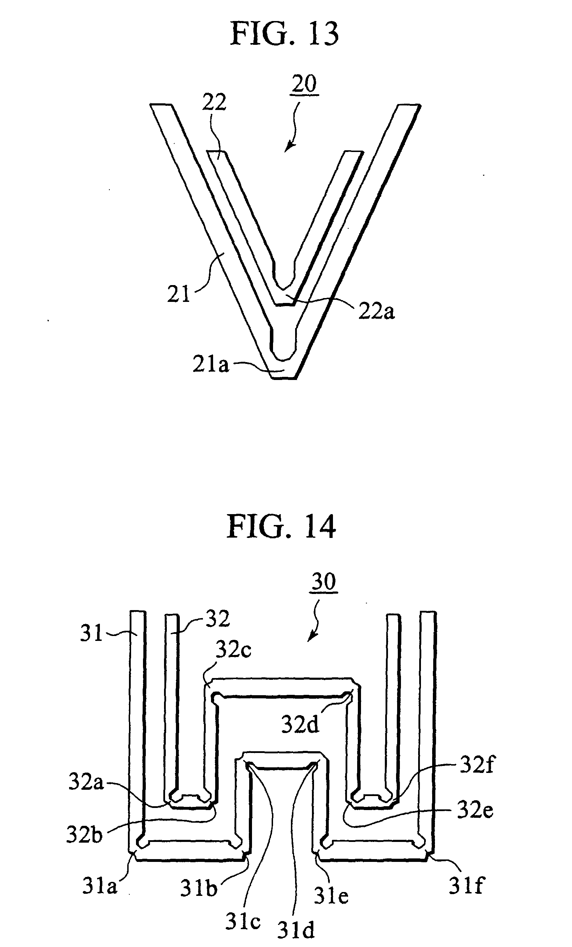

FIG. 13 to FIG. 15 are views for showing other embodiments of the shock absorbing device for a vehicle trim according to the present invention. Note that each of the drawings shows a state of attaching a shock absorbing device to a door trim, which is viewed from the door thickness direction.

A shock absorbing device 20 shown in FIG. 13 includes coaxially disposed inner and outer ribs 21 and 22, which are severally formed into V-shapes. Moreover, corner portions 21a and 22a of the inner and outer ribs 21 and 22 are made thin.

A shock absorbing device 30 shown in FIG. 14 includes coaxially disposed inner and outer ribs 31 and 32, which are severally formed into inverted concave shapes and in which upper sides thereof are made open. Moreover, corner portions 31a to 31f and 32a to 32f of the inner and outer ribs 31 and 32 are made thin.

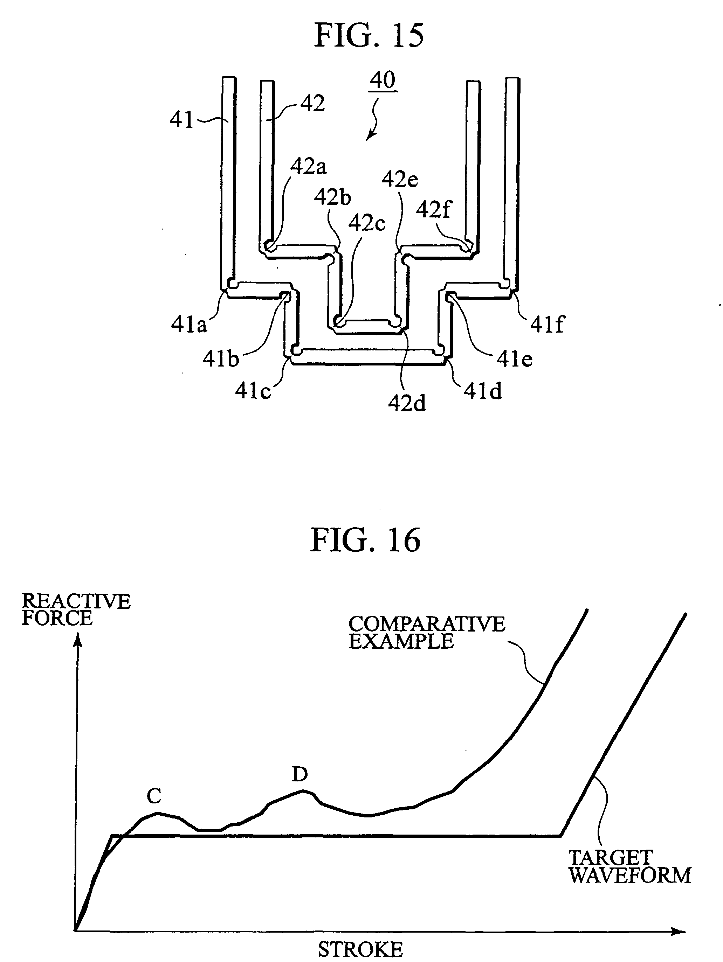

A shock absorbing device 40 shown in FIG. 15 includes coaxially disposed inner and outer ribs 41 and 42, which are severally formed into inverted convex shapes and in which upper sides thereof are made open. Moreover, corner portions 41a to 41f and 42a to 42f of the inner and outer ribs 41 and 42 are made thin.

Similar operations and effects to those described in the previous embodiment can be also obtained from the respective shock absorbing devices 20 to 40 shown in FIG. 13 to FIG. 15. Regarding the respective shock absorbing devices 20 to 40, it is possible to reduce the spaces S for preventing interference between the inner ribs 22, 32 and 42 and the outer ribs 21, 31 and 41, respectively. Moreover, especially in the shock absorbing devices 30 and 40 shown in FIG. 14 and FIG. 15, it is possible to increase the number of wall surfaces of the outer ribs by forming the ribs approximately into the inverted concave shapes or the inverted convex shapes. Accordingly, it is possible to increase the degree of freedom in the design of the ribs which generate the reactive force.

Now, description will be made regarding a comparative example to the embodiments of the present invention. In the comparative example, a type of propylene resin having a specific gravity of 0.9 g/cm^{3,} a melt flow rate of 30 g/10 min., an Izod impact strength of 40 kJ/m, and a bend elastic constant of 950 MPa is used for composing the ribs. Moreover, the inner and outer ribs are formed approximately into U-shapes.

FIG. 16 shows the relationship between the stroke and the reactive force when the force F is applied to the shock absorbing device of the comparative example. In the shock absorbing process, the reactive force firstly marks a peak C which is attributable to the outer rib. However, since the outer rib does not break, the reactive force does not drop adequately. Subsequently, the reactive force marks a peak D which is attributable to the inner rib. However, since the inner rib does not break either, the reactive force does not drop adequately. Thereafter, the reactive force is increased because the door trim is flattened. That is, the reactive force does not drop adequately in this comparative example and the shock absorbing device is flattened before gaining an adequate stroke. As a consequence, the shock absorbing device of the comparative example cannot achieve sufficient shock absorption efficiency unlike the respective embodiments described above.

Note that the detailed constitution of the shock absorbing device for a vehicle trim according to the present invention is not only limited to those described in the respective embodiments. For example, it is also possible to attach three or more ribs. In this case, the protruding length of the outermost rib may be set to the maximum and the protruding lengths of other ribs may be gradually reduced inward. Accordingly, the space S between two adjacent ribs may be set appropriately. In addition, although the respective ribs are formed into the same shape with different dimensions to the above-described embodiments, it is also possible to change the shapes of the respective ribs. In particular, the upper side of the innermost rib may be closed.

Furthermore, regarding the shock absorbing device for a vehicle trim according to the present invention, the material for composing the ribs may be a polyolefin resin composition, which include: 53 parts by weight to 68 parts by weight inclusive of block copolymer (a component C) containing 90 weight % to 95 weight % inclusive of a crystalline polypropylene portion having a density of 0.908 g/cm³ or greater and 5 weight % to 10 weight % inclusive of propylene/ethylene random copolymer having ethylene content in a range from 35 weight % to 45 weight % inclusive, the component C having a melt flow rate (230 °C, 21.2 N (load)) in a range from 20 g/10 min. to 50 g/10 min. inclusive; 12 parts by weight to 20 weight parts inclusive of ethylene/α-olefin copolymer rubber (a component D) having a density in a range from 0.85 g/cm³ to 0.87 g/cm³ inclusive, a melt flow rate (230 °C, 21.2 N (load)) in a range from 0.2 g/10 min. to 5 g/10 min. inclusive, and the α-olefin content in a range from 30 weight % to 40 weight % inclusive; and 22 parts by weight to 30 parts by weight inclusive of talc (a component E) having an average grain size in a range from 1.5 µm to 6 µm inclusive and an average aspect ratio of 5 or greater. Here, the polyolefin resin composition may have Izod impact strength in a range from 25 kJ/m to 50 kJ/m inclusive and a bend elastic constant in a range from 2000 MPa to 3000 MPa inclusive. Moreover, the ribs of the shock absorbing device may be integrated with a trim.

Here, the reasons for numerical restrictions of the respective components are as follows: specifically, when the density of the polypropylene portion is below 0.908 g/cm³ in the component C, the crystallinity of the polypropylene resin is degraded and target rigidity is not sufficiently obtained. When the ethylene content is below 35 weight %, the impact resistance of the polypropylene resin is degraded and the target impact value is not obtained. On the contrary, when the ethylene content exceeds 45 weight %, the flow performance of the polypropylene resin is degraded and the target MFR value is not obtained.

Moreover, formability is degraded when the melt flow rate is below 20 g/10 min. On the contrary, there is a problem in degradation of scratch resistance when the melt flow rate exceeds 50 g/10 min.

Furthermore, scratch resistance is degraded when the propylene/ethylene random copolymer portion falls below 5 weight %. On the contrary, the bend elastic constant is degraded when the propylene/ethylene random copolymer portion exceeds 10 weight %.

Moreover, regarding the component D, the α-olefin content is set in the range from 30 weight % to 40 weight % inclusive, and more preferably in a range from 32 weight % to 38 weight % inclusive. Meanwhile, the melt flow rate of the component D is set in the range from 0.2 g/10 min. to 5 g/10 min. inclusive, and preferably in a range from 0.3 g/10 min. to 4 g/10 min. inclusive. Scratch resistance is degraded when the α-olefin content is below 30 weight %. On the contrary, manufacturing difficulty is encountered when the α-olefin content exceeds 40 weight %. In the meantime, scratch resistance is degraded if the melt flow rate falls below 0.2 g/10 min. or exceeds 5 g/10 min.

Furthermore, if for component E, talc with an average grain size below 1.5 µm was used, talc manufacturing at this size would be of very low quality, and not only would a stable supply of talc of this size be impossible, but a cost increase would also occur. On the contrary, when the average grain size of talc exceeds 6 µm, there is extreme deterioration in the impact resistance and the target impact value cannot be obtained. The average aspect ratio should be set to 5 or greater, and more preferably 5.5 or greater. An elastic modulus of a molded product becomes defective when the average aspect ratio is below 5.

In addition, it is difficult to obtain sufficient rigidity if the amount of talc is below 22 parts by weight, and also difficult to maintain the impact strength if the amount of talc exceeds 30 parts by weight.

Furthermore, it is preferable that the Izod impact strength is set in the range from 25 kJ/m to 50 kJ/m inclusive. When the Izod impact strength is below 25 kJ/m, adequate reactive force cannot be generated when the shock absorbing device is broken by the force from a passenger upon a side collision. Meanwhile, the hardness of the surface of the shock absorbing device is degraded when the Izod impact resistance exceeds 50 kJ/m; accordingly, there is a risk of degradation in scratch resistance performance as an interior material.

It is preferable to set the bend elastic constant in the range from 2000 MPa to 3000 MPa inclusive. Rigidity of the trim itself becomes inadequate if the bend elastic constant falls below 2000 MPa. Meanwhile, if the bend elastic constant exceeds 3000 MPa, the impact strength of the material cannot be sufficiently maintained and the Izod impact strength may be significantly degraded. Accordingly, adequate reactive force cannot be created when the shock absorbing device is broken by the force from a passenger upon a side collision.

As described above, if thermoplastic resin made of the polyolefin resin composition is used, and if the trim and the ribs are integrated together by two-color molding, it is possible to fabricate the shock absorbing device at a relatively low cost and allow adjustment to the physical property balance thereof.

## Claims

1. A shock absorbing device (10, 20 , 30, 40) for a vehicle trim (1) comprising:
- a plurality of shock absorbing ribs (11, 21, 31, 41, 12, 22, 32, 42) provided on a rear surface of the trim (1)
- the trim (1) being provided on a : vehicle interior side of a side panel of a vehicle,
- the shock absorbing ribs (11, 21, 31, 41, 12, 22, 32, 42) being formed to protrude toward the side panel side,
**characterized in that**
- when viewed from the side panel side toward the trim (1) two adjacent shock absorbing ribs (11, 21, 31, 41, 12, 22, 32, 42) are an inner rib (12, 22, 32, 42) and an outer rib (11, 21, 31, 41) that are disposed coaxially with provision of a predetermined space (5) between each other, wherein
- at least part of an upper side of said outer rib (11, 21, 31, 41) is open with both ends of the outer rib (11, 21, 31, 41) positioned more outward than the inner rib (12, 22, 32, 42), such that the inner rib (12, 22, 32, 42) lies within the boundaries of the outer rib (11, 21, 31, 41), the shock absorbing device (10, 20 , 30, 40) further comprising a protruding length (L1) of the outer rib (11, 21, 31, 41) protruding in the thickness direction that is longer an that of the inner rib (12, 22, 32, 42).

2. A shock absorbing device for a vehicle trim according to claim 1,
wherein a proportion of the protruding length (L1) of the outer rib (11, 21, 31, 41) to a space (S) between the outer rib(11, 21, 31, 41) and the inner rib (12, 22, 32, 42) is set in a range from 1: 0.1 to 1: 2.

3. The shock absorbing device for a vehicle trim according to claims 1 or 2, **characterized in that** at least the outer rib (11) is formed into a U-shape, when viewed from the side panel side toward the trim (1).

4. The shock absorbing device for a vehicle trim according to claims 1 or 2, **characterized in that** at least the outer rib (21) is formed into a V-shape, when viewed from the side panel side toward the trim (1).

5. The shock absorbing device for a vehicle trim according to claims 1 or 2, **characterized in that** at least the outer rib (31) has a bottom that is, when regarded from the rib inside, formed into a convex shape with an upper part of the outer rib (31) open, when viewed from the side panel side toward the trim (1).

6. The shock absorbing device for a vehicle trim according to claims 1 or 2, **characterized in that** at least the outer rib (41) has a bottom that is, when regarded from the rib inside, formed into a concave shape with an upper part of the outer rib (41) open, when viewed from the side panel side toward the trim (1).

7. The shock absorbing device for a vehicle trim according to any of claims 3 to 6, **characterized in that** the corners (11a, 11b, 12a, 12b) of the shock absorbing ribs (11, 21, 31, 41, 12, 22, 32, 42) that extend in the panel thickness direction have a thickness that is reduced if compared to the general rib thickness.

8. A shock absorbing device for a vehicle trim according to any of claims 1 through 7,
wherein a material constituting the shock absorbing ribs (11,21, 31, 41, 12, 22, 32, 42) is a polyolefin resin composition comprising 100 parts by weight of block copolymer including 75 weight % to 95 weight % inclusive of polypropylene having a density of 0.895 g/cm³ or more, and 5 weight % to 25 weight % inclusive of propylene/ethylene random copolymer having ethylene content in a range from 35 weight % to 45 weight % inclusive, the polyolefin resin composition having a melt flow rate, being measured at 230°C and 21.2 N load, in a range from 5 g/10 min. to 50 g/10 min. inclusive, and
Izod impact strength of the polyolefin resin composition is set in a range from 5 kJ/m to 20 kJ/m inclusive, and a bend elastic constant thereof is set in a range from 700 MPa to 2000 MPa inclusive.

9. A shock absorbing device for a vehicle trim according to any of claims 1 through 7,
wherein a material constituting the shock absorbing ribs (11, 21, 31, 41, 12, 22, 32, 42) is a polyolefin resin composition comprising: 90 weight parts or more but below 100 weight parts of block copolymer including 75 weight % to 95 weight % inclusive of polypropylene having a density of 0.895 g/cm³ or more, and 5 weight % to 25 weight % inclusive of propylene/ethylene random copolymer having ethylene content in a range from 35 weight % to 45 weight % inclusive, the polyolefin resin composition having a melt flow rate, being measured at 230°C and 21.2 N load, in a range from 5 g/10 min. to 50 g/10 min. inclusive; and more than 0 weight part to 10 weight parts of talc having an average grain size in a range from 1.5 to 6 µm inclusive, and
Izod impact strength of the polyolefin resin composition is set in a range from 5 kJ/m to 20 kJ/m inclusive, and a bend elastic constant thereof is set in a range from 700 MPa to 2000 MPa inclusive.

10. A shock absorbing device for a vehicle trim according to any of claims 1 through 9,
wherein a protruding direction of the shock absorbing ribs (11, 21, 31, 41, 12, 22, 32, 42) is perpendicular to an exterior surface of the trim (1).

## Patentansprüche

1. Ein Stoßabsorber (10, 20, 30, 40) für ein Fahrzeugverkleidungselement (1), umfassend:
eine Vielzahl von stoßabsorbierenden Rippen (11, 21, 31, 41, 12, 22, 32, 42), die an einer Rückseite des Verkleidungselementes (1) angeordnet sind, wobei
das Verkleidungselement (1) an einer Fahrzeuginnenseite einer Seitenwand eines Fahrzeugs angeordnet ist, und
die stoßabsorbierenden Rippen (11, 21, 31, 41, 12, 22, 32, 42) so ausgebildet sind, dass sie zu der Seitenwandseite hervorzustehen,
**dadurch gekennzeichnet, dass**
zwei benachbarte stoßabsorbierende Rippen (11, 21, 31, 41, 12, 22, 32, 42), wenn sie von der Seitenwandseite in Richtung des Verkleidungselementes (1) betrachtet werden, eine innere Rippe (12, 22, 32, 42) und eine äußere Rippe (11, 21, 31, 41) sind, welche koaxial unter Bereitstellung eines vorbestimmten Abstandes (S) zwischen den beiden angeordnet sind, wobei
wenigstens ein Teil einer oberen Seite der äußeren Rippe (11, 21, 31, 41) offen ist und beide Enden der äußeren Rippe (11, 21, 31, 41) weiter nach außen positioniert sind, als die innere Rippe (12, 22, 32, 42), so dass die innere Rippe (12, 21, 32, 42) innerhalb der Grenzlinien der äußeren Rippe (11, 21, 31, 41) liegt,
der Stoßabsorber (10, 20, 30, 40) ferner eine hervorstehende Länge (L1) der äußeren Rippe (11, 21, 31, 41) umfasst, welche in Richtung der Dicke vorsteht und länger ist, als die der inneren Rippe (12, 22, 32, 42).

2. Der Stoßabsorber für ein Fahrzeugverkleidungselement nach Anspruch 1, wobei ein Verhältnis der hervorstehenden Länge (L1) der äußeren Rippe (11, 21, 31, 41) zu einem Raum (S), zwischen der äußeren Rippe (11, 21, 31, 41) und der inneren Rippe (12, 22, 32, 42) auf einen Bereich von 1:0,1 bis 1:2 festgelegt ist.

3. Der Stoßabsorber für ein Fahrzeugverkleidungselement nach Anspruch 1 oder 2, **dadurch gekennzeichnet, dass** wenigstens die äußere Rippe (11) U-förmig ausgebildet ist, wenn sie von der Seitenwandseite in Richtung des Verkleidungselementes (1) betrachtet wird.

4. Der Stoßabsorber für ein Fahrzeugverkleidungselement nach Anspruch 1 oder 2, **dadurch gekennzeichnet, dass** wenigstens die äußere Rippe (21) V-förmig ausgebildet ist, wenn sie von der Seitenwandseite in Richtung des Verkleidungselementes (1 ) betrachtet wird.

5. Der Stoßabsorber für ein Fahrzeugverkleidungselement nach Anspruch 1 oder 2, **dadurch gekennzeichnet, dass** wenigstens die äußere Rippe (31) einen Boden aufweist, der von der Innenseite der Rippe betrachtet, konvex geformt ist, und dass ein oberer Teil der äußeren Rippe (31), wenn sie von der Seitenwandseite in Richtung des Verkleidungselement (1) betrachtet wird, offen ist.

6. Der Stoßabsorber für ein Fahrzeugverkleidungselement nach Anspruch 1 oder 2, **dadurch gekennzeichnet, dass** wenigstens die äußere Rippe (41) einen Boden aufweist, der von der Innenseite der Rippe betrachtet, konkav geformt ist, und dass ein oberer Teil der äußeren Rippe (41), wenn sie von der Seitenwandseite in Richtung zu dem Verkleidungselement (1) betrachtet wird, offen ist.

7. Der Stoßabsorber für ein Fahrzeugverkleidungselement nach einem der Ansprüche 3 bis 6, **dadurch gekennzeichnet, dass** sich die in Richtung der Wanddicke erstreckenden Ecken (11a, 11b, 12a, 12b) der Stoßabsorbierenden Rippen (11, 21, 31, 41, 12, 22, 32, 42) eine Dicke aufweisen, die im Vergleich zur generellen Dicke der Rippen verringert ist.

8. Ein Stoßabsorber für ein Fahrzeugverkleidungselement nach einem der Ansprüche 1 bis 7, wobei ein die stoßabsorbierenden Rippen (11, 21, 31, 41, 12, 22, 32, 42) bildendes Material eine Polyolefinharzzusammensetzung ist, die umfasst: 100 Gewichtsteile eines Blockcopolymers, enthaltend 75 Gew.-% bis einschließlich 95 Gew.-% an Polypropylen mit einer Dichte von 0,895 g/cm³ oder mehr, und 5 Gew.-% bis einschließlich 25 Gew.-% an wirrem Propylen/Ethylen Copolymer mit einem Ethylenanteil in einem Bereich von 35 Gew.-% bis einschließlich 45 Gew.-%, wobei die Polyolefinharzzusammensetzung eine Schmelzfließgeschwindigkeit in einem Bereich von 5 g/10 min bis einschließlich 50 g/10 min, die bei 230°C und einer Last von 21,2 N gemessen wird, hat, und
die Izod-Kerbenschlagfestigkeit der Polyolefinharzzusammensetzung in einem Bereich von 5 kJ/m bis einschließlich 20 kJ/m und eine Biegeelastizitätskonstante dieser in einem Bereich von 700 MPa bis einschließlich 2000 MPa liegt.

9. Ein Stoßabsorber für ein Fahrzeugverkleidungselement nach einem der Ansprüche 1 bis 7, wobei ein die stoßabsorbierenden Rippen (11, 21, 31, 41, 12, 22, 32, 42) bildendes Material eine Polyolefinharzzusammensetzung ist, die umfasst: 90 Gewichtsteile oder mehr aber weniger als 100 Gewichtsteile eines Blockcopolymers, enthaltend 75 Gew.-% bis einschließlich 95 Gew.-% an Polypropylen mit einer Dichte von 0,895 g/cm³ oder mehr, und 5 Gew.-% bis einschließlich 25 Gew.-% an zufälligem Propylen/Ethylen Copolymer mit einem Ethylenanteil in einem Bereich von 35 Gew.-% bis einschließlich 45 Gew.-%, wobei die Polyolefinharzzusammensetzung eine Schmelzfließgeschwindigkeit in einem Bereich von 5 g/10 min bis einschließlich 50 g/10 min, die bei 230°C und einer Last von 21,2 N gemessene wird, und mehr als 0 Gewichtsteile bis 10 Gewichtsteile an Talk mit einer durchschnittlichen Korngröße von 1,5 µm bis einschließlich 6 µm, hat, und
die Izod-Kerbenschlagfestigkeit der Polyolefinharzzusammensetzung in einem Bereich von 5 kJ/m bis einschließlich 20 kJ/m und eine Biegeelastizitätskonstante dieser in einem Bereich von 700 MPa bis einschließlich 2000 MPa liegt.

10. Ein Stoßabsorber für ein Fahrzeugverkleidungselement nach einem der Ansprüche 1 bis 9, wobei eine hervorstehende Richtung der stoßabsorbierenden Rippen (11, 21, 31, 41, 12, 22, 32, 42) senkrecht zu einer äußeren Oberfläche des Verkleidungselementes (1) ist.

## Revendications

1. Dispositif d'absorption de choc (10, 20, 30, 40) pour une garniture d'automobile (1) comprenant:
plusieurs nervures d'absorption de choc (11, 21, 31, 41, 12, 22, 32, 42) prévues sur une surface arrière de la garniture (1);
la garniture (1) étant prévue sur un côté intérieur de véhicule d'un panneau latéral d'un véhicule;
les nervures d'absorption de choc (11, 21, 31, 41, 12, 22, 32, 42) étant formées pour faire saillie vers le côté de panneau latéral;
**caractérisé en ce que**:
lorsque l'on observe depuis le côté de panneau latéral vers la garniture (1), deux nervures d'absorption de choc (11, 21, 31, 41, 12, 22, 32, 42) adjacentes sont une nervure interne (12, 22, 32, 42) et une nervure externe (11, 21, 31, 41) qui sont disposées de manière coaxiale en prévoyant un espace (S) prédéterminé entre elles, dans lequel:
au moins une partie d'un côté supérieur de ladite nervure externe (11, 21, 31, 41) est ouverte avec les deux extrémités de la nervure externe (11, 21, 31, 41) positionnées davantage vers l'extérieur par rapport à la nervure interne (12, 22, 32, 42), de sorte que la nervure interne (12, 22, 32, 42) se trouve dans les limites de la nervure externe (11, 21, 31, 41);
le dispositif d'absorption de choc (10, 20, 30, 40) comprenant en outre une longueur en saillie (L1) de la nervure externe (11, 21, 31, 41) faisant saillie dans la direction d'épaisseur qui est plus longue que celle de la nervure interne (12, 22, 32, 42).

2. Dispositif d'absorption de choc pour une garniture d'automobile selon la revendication 1, dans lequel une proportion de la longueur en saillie (L1) de la nervure externe (11, 21, 31, 41) sur un espace (S) situé entre la nervure externe (11, 21, 31, 41) et la nervure interne (12, 22, 32, 42) est de l'ordre de 1:0,1 à 1:2.

3. Dispositif d'absorption de choc pour une garniture d'automobile selon les revendications 1 ou 2, **caractérisé en ce qu'**au moins la nervure externe (11) est formée selon une forme de U, lorsqu'elle est observée depuis le côté du panneau latéral vers la garniture (1)

4. Dispositif d'absorption de choc pour une garniture d'automobile selon les revendications 1 ou 2, **caractérisé en ce qu'**au moins la nervure externe (21) est formée selon une forme de V, lorsqu'elle est observée depuis le côté du panneau latéral vers la garniture (1).

5. Dispositif d'absorption de choc pour une garniture d'automobile selon les revendications 1 ou 2, **caractérisé en ce qu'**au moins la nervure externe (31) possède une partie inférieure qui est, lorsqu'elle est observée depuis l'intérieur de la nervure, formée selon une forme convexe avec une partie supérieure de la nervure externe (31) ouverte, lorsqu'elle est observée depuis le côté du panneau latéral vers la garniture (1).

6. Dispositif d'absorption de choc pour une garniture d'automobile selon les revendications 1 ou 2; **caractérisé en ce qu'**au moins la nervure externe (41) possède une partie inférieure qui est, lorsqu'elle est observée depuis l'intérieur de la nervure, formée selon une forme concave avec une partie supérieure de la nervure externe (41) ouverte, lorsqu'elle est observée depuis le côté du panneau latéral vers la garniture (1).

7. Dispositif d'absorption de choc pour une garniture d'automobile selon l'une quelconque des revendications 3 à 6, **caractérisé en ce que** les coins (11a, 11b, 12a, 12b) des nervures d'absorption de choc (11, 21, 31, 41, 12, 22, 32, 42) qui s'étendent dans la direction de l'épaisseur du panneau, ont une épaisseur qui est réduite, si on la compare à l'épaisseur de nervure générale.

8. Dispositif d'absorption de choc pour une garniture d'automobile selon l'une quelconque des revendications 1 à 7, dans lequel un matériau constituant les nervures d'absorption de choc (11, 21, 31, 41, 12, 22, 32, 42) est une composition de résine polyoléfine comprenant 100 parts en poids de copolymère bloc comprenant de 75% en poids à 95% en poids inclus de polypropylène ayant une densité de 0,895 g/cm³ ou plus, et de 5% en poids à 25% en poids inclus de copolymère statistique de propylène/éthylène ayant une teneur en éthylène de l'ordre de 35% en poids 45% en poids inclus, la composition de résine polyoléfine ayant un débit de matière fondue, qui est mesuré à 230°C et à une charge de 21,2 N, de l'ordre de 5 g/10 min à 50 g/10 min inclus, et la résistance au choc Izod de la composition de résiné polyoléfine est de l'ordre de 5 kJ/m à 20 kJ/m inclus, et sa constante élastique de courbure est de l'ordre de 700 MPa à 2000 MPa inclus.

9. Dispositif d'absorption de choc pour une garniture d'automobile selon l'une quelconque des revendications 1 à 7, dans lequel un matériau constituant les nervures d'absorption de choc (11, 21, 31, 41, 12, 22, 32, 42) est une composition de résine polyoléfine comprenant 90 parts en poids ou plus, mais moins de 100 parts en poids du copolymère bloc comprenant de 75% en poids à 95% en poids inclus de polypropylène ayant une densité de 0,895 g/cm³ ou plus, et de 5% en poids à 25% en poids inclus de copolymère statistique de propylène/éthylène ayant une teneur en éthylène de l'ordre de 35% en poids à 45% en poids inclus, la composition de résine de polyoléfine ayant un débit de matière fondue, qui est mesuré à 230°C et à une charge de 21,2 N, de l'ordre de 5 g/10 min à 50 g/10 min inclus; et plus de 0 part en poids à 10 parts en poids de talc ayant une taille moyenne de grain allant de 1,5 à 6 µm inclus, et la résistance au choc Izod de la composition de résine polyoléfine est de l'ordre de 5 kJ/m à 20 kJ/m inclus, et sa constante élastique de courbure est de l'ordre de 700 MPa à 2000 MPa inclus.

10. Dispositif d'absorption de choc pour une garniture d'automobile selon l'une quelconque des revendications 1 à 9, dans lequel une direction en saillie des nervures d'absorption de choc (11, 21, 31, 41, 12, 22, 32, 42) est perpendiculaire à une surface extérieure de la garniture (1).
